# EUROPEAN PATENT APPLICATION

(11) **EP 3 351 300 A1**
(43) Date of publication of application: **25.07.2018**
(21) Application number: 17152530.6
(22) Date of filing: 20.01.2017
(51) Int. Cl.: B01J 21/12, B01J 23/34, B01J 35/10, B01J 37/02, B01D 53/86

(54) **MANGANESE OXIDE CONTAINING ALUMINA COMPOSITION, A METHOD FOR MANUFACTURING THE SAME AND USE THEREOF**

(71) Applicant: SASOL Germany GmbH, 20537 Hamburg (DE)
(72) Inventor: NIEMEYER, Dierk, 25469 Halstenbek (DE); HARMENING, Thomas, 48159 Münster (DE); SCHÖNEBORN, Marcos, 22303 Hamburg (DE); ROLFS, Sönke, 25524 Itzehoe (DE)
(74) Representative: Müller Schupfner & Partner Patent- und Rechtsanwaltspartnerschaft mbB

(57) **Abstract**

The present invention is concerned with a manganese oxide containing alumina composition with high resistance against SOx and a method for making the composition and use of the composition as catalyst carrier. The composition comprises an alumina based material, manganese oxide, and silica.

## Description

### INTRODUCTION

The present invention relates to a manganese oxide containing alumina composition with high resistance against SOx and a method for making the composition und use of the composition as catalyst carrier. The composition comprises at least an alumina based support material, manganese oxide, and silica (SiO₂), optionally as part of the alumina based support material.

### BACKGROUND:

Lean burn engines, as for example diesel engines are known to provide high fuel efficiency. The oxygen rich operation conditions in these engines result in prevailing oxidizing conditions in an emission stream. In these engine systems, the main raw emission pollutants are CO, NOx, unburned hydrocarbons and soot particles. Catalyst systems, including various components and precious metals, for dealing with emission control have been developed. Usually a so called Diesel Oxidation Catalyst (DOC) converts CO into CO₂ and the unburned hydrocarbons into CO₂ and water. Due to the oxygen rich conditions, the conversion of NOx into N₂ requires special strategies and dedicated NOx after treatment catalysts, such as a Lean NOx Trap (LNT) or Selective Catalytic Reduction (SCR) catalyst(s). The NOx removal by these catalysts is enhanced by a high NO₂ to NO ratio that is obtainable by an effective NO oxidation by the DOC. The NO oxidation performance is also relevant for operating a Continuous Regeneration Trap (CRT) for the removal and combustion of soot particles.

There is a continuous demand for improving the performance and long term stability of the various components of emission control catalyst system. Furthermore a reduction of the precious metal loading of the catalyst system is desirable in order to reduce its cost. This can for example be achieved by incorporating catalytically active and/or promoting metal oxides, as for example manganese oxides, into the catalyst system.

Due to its high redox activity manganese oxide (MnOx) itself shows activity or at least has a beneficial promoting effect in the desired oxidation reactions like CO oxidation, NO oxidation and the oxidation of hydrocarbons or soot.

Therefore, manganese oxide has been reported to be a useful component in automotive emission control catalyst systems, in particular for application in a diesel oxidation catalyst, catalyzed soot filter or selective catalytic reduction catalyst.

It is beneficial to use the manganese oxide in an enhanced dispersion state by utilizing it in tight contact to or supported on a high surface area support material, in particular an alumina based support material as for example alumina or silica-alumina.

The preparation of manganese oxide containing alumina based support materials and their use especially in automotive emission control catalysts is well known in the art. For example US2015/0165423 A1 teaches the use of a metal oxide support containing manganese as a catalyst support material for platinum group metals in a diesel oxidation catalyst with improved catalytic performance. In addition WO2016/130456 A1 describes the beneficial effects on the NO₂ storage/release properties that are attained by incorporating manganese oxide into an oxidation catalyst as passive NOx adsorption component.

Furthermore, manganese oxides and supported manganese oxides are known to be active in the selective catalytic reduction of NOx to N₂.

However, some diesel fuel qualities as well as lubricants are showing considerable sulphur levels leading to poisoning effects on the emission control catalyst system. The sulfur compounds contained in fuels are oxidized in the combustion process to form sulfur oxides, SO₂ and SO₃, further referred to as SOx. In turn these SOx are known to easily react with manganese oxides at the prevailing temperature under operation conditions, resulting in severe deactivation of the catalyst system. The deterioration of manganese oxide functionality is ascribed to its strong adsorption of SOx leading to the formation of surface and bulk manganese-sulfates (M. Tepluchin, Catalysis Today 258 (2015) 498).

Both alumina and silica-alumina supported manganese oxide materials as described in the art adsorb a considerably high amount of SOx, thus leading to significant deactivation by poisoning the manganese oxide functionality.

The object of the present invention is therefore to provide a manganese oxide containing composition applicable in emission control catalysts that is highly stable towards the uptake of SOx.

### SUMMARY OF THE INVENTION:

The inventors of the present application have surprisingly found a composition having amongst other benefits improved resistance against SOx for example when used in Diesel Oxidation Catalyst and (a) method(s) for making such composition.

According to one aspect of the invention there is provided a composition with high stability against SOx comprising:
a support material comprising an alumina based support material and manganese oxide, the content of the manganese oxide in the support material being between 0.1 and 20 wt.% of the total support material calculated as MnO₂, the support material further comprising SiO₂ and optionally oxides of zirconium, titanium, rare-earth elements or combinations thereof, the SiO₂ being either incorporated into the support material or coating the support material;
   i) wherein where the SiO₂ is incorporated into the support material, the SiO₂ content is greater than 5 wt% relative to the alumina based support material, if no oxides of zirconium, titanium, rare-earth elements or combinations thereof are incorporated into the support material or;
   ii) wherein where the SiO₂ is incorporated into the support material the SiO₂ content is at least 5 wt% relative to the alumina based support material, if oxides of zirconium, titanium, rare-earth elements or combinations thereof are incorporated into the support material or;
   iii) wherein the SiO₂ coats the support material, the SiO₂ coating makes up at least 0.2 wt.% relative to the alumina based support material.

The above definition encompasses the following alternatives
- i) and iii) both apply at the same time
- ii) and iii) both apply at the same time and
- only one of i), ii) and iii) applies.

If present the oxides of zirconium, titanium, rare-earth elements or combinations thereof form part of what is referred to as the support material and of what it is referred to as the alumina based support material. The alumina based support material does not contain manganese oxide. The support material contains manganese oxide and silica, either as part of the alumina based support material, separately added or both.

The composition according to the first embodiment comprises a support material comprising an alumina based support material and manganese oxide, the content of the manganese oxide in the support material being between 0.1 and 20 wt.% of the total support material calculated as MnO₂, the support material further comprising SiO₂, wherein where the SiO₂ is incorporated into the support material, the SiO₂ content is greater than 5 wt% relative to the alumina based support material, used in the first embodiment.

According to a second embodiment the composition comprises a support material comprising an alumina based support material and manganese oxide, the content of the manganese oxide in the support material being between 0.1 and 20 wt.% of the total support material, calculated as MnO₂, the support material further comprising SiO₂ and oxides of zirconium, titanium, rare-earth elements or combinations thereof, wherein where the SiO₂ is incorporated into the support material, the SiO₂ content is at least 5 wt% relative to the alumina based support material.

According to a third embodiment the composition comprises a support material comprising an alumina based support material and manganese oxide, the content of the manganese oxide in the support material being between 0.1 and 20 wt.% of the total support material calculated as MnO₂, the support material comprising oxides of zirconium, titanium, rare-earth elements or combinations thereof, the support material being coated with SiO₂, wherein where the SiO₂ coats the support material the SiO₂ coating makes up at least 0.2wt.% relative to the alumina based support material.

According to a fourth embodiment the composition comprises a support material comprising an alumina based support material and manganese oxide, the content of the manganese oxide in the support material being between 0.1 and 20 wt.% of the total support material calculated as MnO₂, the support material being coated with SiO₂, wherein where the SiO₂ coats the support material the SiO₂ coating makes up at least 0.2 wt.% relative to the alumina based support material.

The composition may be used in a catalyst system for emission control.

At least 75 wt. % of the support material, more preferably at least 80 wt. % of the support material consist of the alumina based support material.

The alumina based support material is either alumina, silica-alumina, or a mixture thereof, preferably alumina. The support material preferably includes oxides of zirconium, preferably ZrO₂.

Typically, the BET surface area of the alumina based support material is above 50 m²/g and more preferably above 100 m²/g. The term BET surface area refers to the Brunauer-Emmett-Teller method for the determination of specific surface area by N₂ adsorption. Independent thereof the BET surface area of the support material is typically above 50 m²/g and more preferably above 100 m²/g. Independent thereof the pore volume of the alumina based support material is preferably between 0.1 ml/g and 1.5 ml/g. Independent thereof the pore volume of the support material is preferably between 0.1 ml/g and 1.5 ml/g.

The alumina based support material has no or very little amounts of sodium impurities. In particular the alumina based support material comprises less than 500 ppm Na₂O, more preferably less than 100 ppm Na₂O. Independent thereof the support material typically comprises less than 500 ppm Na₂O, more preferably less than 100 ppm Na₂O.

The manganese oxide content is preferably between 1 and 10 wt.%, calculated as MnO₂, of the support material. The manganese oxide may exist in its various oxidation states either in bulk form or surface forms, or as discrete manganese oxide forms.

The manganese oxide is preferably derived by thermal decomposition of soluble manganese salts selected from acetate, nitrate, sulfate; preferably acetate. These manganese salts decompose during a calcination step to form a manganese oxide, and solutions of the soluble manganese salts are further referred to as manganese oxide salt solutions.

The support material is either coated with SiO₂ or the SiO₂ is incorporated into the support material.

Where the alumina based support material is silica-alumina, there is a specific amount of SiO₂ incorporated into the silica-alumina support material or an additional amount of SiO₂ used to coat the silica-alumina support material.

Preferably the silica-alumina is obtainable by mixing an aluminium compound with a silicic acid compound in an aqueous medium, and subsequently drying or calcining the product obtained. The aluminium component used is a C2- to C20- aluminium alkoxide hydrolyzed with water and preferably purified by means of ion exchangers. Prior, during or after the hydrolyzation silicic acid, preferably orthosilicic acid, preferably purified by means of ion exchangers, is added to the aluminium compound respectively the hydrolyzed aluminium compound. The method is described in detail in US 5045519 A.

Where the SiO₂ is incorporated into the support material without oxides of zirconia, titanium, rare earth elements or combinations thereof, the support material preferably comprises a SiO₂ content of at least 10 wt%, preferably between 10 wt% and 40 wt%, most preferably between 10 wt% and 25 wt%, each relative to the alumina based support material.

Where the support material includes, oxides of zirconia, titanium, rare earth elements or combinations thereof, particularly ZrO₂, then at least 5% wt. and preferably up to 40 wt %, more preferably at least 5 wt% and up to 25 wt% of SiO₂ and at least 5% wt. to 40 wt %, preferably 5 wt% to 25 wt % of oxides of zirconia, titanium, rare earth elements or combinations thereof, preferably ZrO₂, is incorporated into the support material, each relative to the aluminium support material.

Coating refers to a surface covering including the surface of the inner pore walls. Where the SiO₂ coats the support material, the SiO₂ coating is preferably 0,2 to 5 wt.%, most preferably 0,2 to 1 wt.% relative to the alumina based support material as determined by the amount of SiO₂ solution which is added to the support material.

According to a second aspect of the invention there is provided a method to prepare a composition with high stability against SOx, the method comprising with the steps ii) to iv) in any order):
i) providing an alumina based support material;
ii) optionally adding oxides of zirconium, titanium, rare-earth elements or combinations thereof to the alumina based support material or to the manganese oxide impregnated support material;
iii) impregnating the alumina based support material (optionally comprising oxides of zirconium, titanium, rare-earth elements or combinations) with a manganese oxide salt solution to form a manganese oxide impregnated support material; and
iv) adding SiO₂ into the alumina based support material (optionally comprising oxides of zirconium, titanium, rare-earth elements or combinations) or the manganese oxide impregnated support material by:
   a. coating the manganese oxide impregnated support material with a SiO₂ solution to form a SiO₂ coating around the manganese oxide impregnated support material (at least after calcination), the SiO₂ coating forming at least 0.2 wt.% of the alumina based support material (excluding manganese oxides); or
   b. incorporating SiO₂ into the support material, wherein where the SiO₂ is incorporated into the alumina based support material the SiO₂ content is at least 5 wt% relative to the alumina based support material (excluding manganese oxides) if no oxides of zirconium, titanium, rare-earth elements or combinations thereof are incorporated into the support material; or
   c. incorporating SiO₂ into the support material, wherein where the SiO₂ is incorporated into the alumina based support material the SiO₂ content is at least 5 wt% relative to the alumina based support material (excluding manganese oxides) if oxides of zirconium, titanium, rare-earth elements or combinations thereof are incorporated into the support material.

However, step iv) may also be applied as part of the manufacturing step of the alumina based support material provided in step i), in which case the alumina based support material is a silica-alumina (e.g. for steps iv) b) and iv) c)).

Preferably the method is carried out in the following order of steps i), ii) iii) and then iv).

According to a first embodiment of the method, the method includes providing an alumina based support material; adding oxides of zirconium, titanium, rare-earth elements or combinations thereof to the alumina based support material; impregnating the alumina based support material with a manganese oxide salt solution to form (at least after calcination) a manganese oxide impregnated support material; and coating the manganese oxide impregnated support material with a SiO₂ solution to form (at least after calcination) a SiO₂ coating around the manganese oxide impregnated support material, the SiO₂ coating forming at least 0.2 wt.% of the impregnated manganese oxide support material.

According to an alternative method of the first embodiment of the method (if no oxides of zirconium, titanium, rare-earth elements or combinations thereof are incorporated), the method includes providing an alumina based support material; impregnating the alumina based support material with a manganese oxide salt solution to form (at least after calcination) a manganese oxide impregnated support material; and coating the manganese oxide impregnated support material with a SiO₂ solution to form a SiO₂ coating around the manganese oxide impregnated support material, the SiO₂ coating forming at least 0.2 wt.% relative to the alumina based support material.

According to a second embodiment of the method (if no oxides of zirconium, titanium, rare-earth elements or combinations thereof are incorporated), the method includes providing an alumina based support material; impregnating the alumina based support material with a manganese oxide salt solution to form a manganese oxide impregnated support material; and adding SiO₂ into the alumina based support material wherein the content of SiO₂ is greater than 5 wt% of the support material.

According to a third embodiment of the method, the method includes providing an alumina based support material; adding oxides of zirconium, titanium, rare-earth elements or combinations thereof to the alumina based support material; impregnating the alumina based support material with a manganese oxide salt solution to form a manganese oxide impregnated support material; and adding SiO₂ to the alumina based support material, wherein the content of SiO₂ is at least 5 wt% of the support material.

This method includes adding the oxide or a solution of the oxide of zirconia, ceria, titania or rare earth elements to an aluminium compound and then calcining. Preferably oxides of zirconium, more preferably ZrO₂ are incorporated into the support material.

The alumina based support material is preferably alumina, silica-alumina, or a mixture thereof and most preferably alumina.

Different types of impregnation techniques can be used for impregnation. These comprise for example incipient wetness impregnation, equilibrium deposition filtration, or wetness impregnation.

The alumina based support material is preferably impregnated with a manganese oxide salt solution by incipient wetness impregnation. The content of the manganese oxide in the support material is between 0.1 and 20 wt.% of the total support material calculated as MnO₂, preferably between 1 and 10 wt.%, calculated as MnO₂, of the support material.

The calcining of the final composition to obtain the support material may be carried out at a temperature between 100 and 1000°C, preferably 500 to 900°C, each for at least 1/2 hour. The method of the invention may include a further step of calcining, namely calcining the manganese oxide impregnated support material at a temperature of between 100 and 1000°C, preferably 500 to 900°C, each for at least 1/2 hour to form a calcined manganese oxide impregnated support material.

The manganese oxide impregnated support material or calcined manganese oxide impregnated support material is either coated with a SiO₂ solution or a SiO₂ solution is incorporated into the alumina based support material.

The term SiO₂ solution as used herein refers to a solution containing a suitable compound that is able to form SiO₂ during a subsequent drying or calcination step. Examples of such SiO₂ sources are silicic acid, in particular orthosilicic acid obtained from water glass by ion exchange.

When coating is selected, the either calcined or non-calcined manganese oxide impregnated support material is then coated with a SiO₂ solution. The SiO₂ solution is preferably a silicic acid. Coating refers to a surface covering including the surface of inner pore walls of the manganese oxide impregnated support material.

The amount of SiO₂ coating is preferably 0,2 to 5 wt.%, most preferably 0,2 -1 wt.% relative to the alumina based support material, as each determined by the amount of SiO₂ in the SiO₂ solution which is added to the support material and calculated as SiO₂.

In particular, the coating is achieved by incipient wetness impregnation, where the volume of the SiO₂ impregnation solution is nearly equal to the pore volume of the manganese oxide impregnated support material. This method is known to lead to uniform distribution of the SiO₂ throughout the pore system of the manganese oxide impregnated support material.

The coated calcined or non-calcined manganese oxide impregnated support is then subjected to a further thermal treatment step at a temperature above 100°C for at least 0.5 hours after the SiO₂ is added, preferably at 500-900°C for at least 0.5 hours.

Where the SiO₂ is incorporated into the alumina based support material without oxides of of zirconia, titanium, rare earth elements or combinations thereof, the support material preferably comprises a SiO₂ content of at least between 10 wt% and 40 wt%, most preferably between 10 wt% and 25 wt %.

Where the support material includes oxides of zirconia, titanium, rare earth elements or combinations thereof, in particular ZrO₂, then at least 5% wt. and preferably up to 40 wt %, more preferably at least 5wt% and up to 25 wt% of SiO₂ and at least 5 wt% to up to 40 wt%, preferably greater than 5 wt% up to 25 wt.% of ZrO₂ is incorporated relative to the alumina based support material.

The SiO₂ may be incorporated into the support material by adding silicic acid to an aluminium compound that is formed by hydrolysis of aluminium alkoxides. When ZrO₂ is further incorporated into the support material, a compound that forms ZrO₂ after a calcination step, preferably Zr-Acetate is added as an aqueous solution (solution of the oxide of zirconium) to an aluminium compound/water/silicic acid mixture that is formed by the hydrolysis. The respective mixture obtained is subsequently dried, preferably by spray drying and calcined at a temperature above 500°C for at least an hour.

The support may contain other metal oxides such as alkaline earth metal oxide in particular magnesium oxide or barium oxide.

It is shown that the SOx uptake capacity of the compositions of the present invention is significantly reduced when compared to state-of-the art manganese oxide containing compositions. This effect can clearly be ascribed to the inclusion of SiO₂ into the catalyst composition.

The invention will now be described with reference to the following non-limiting examples and Figures, where:

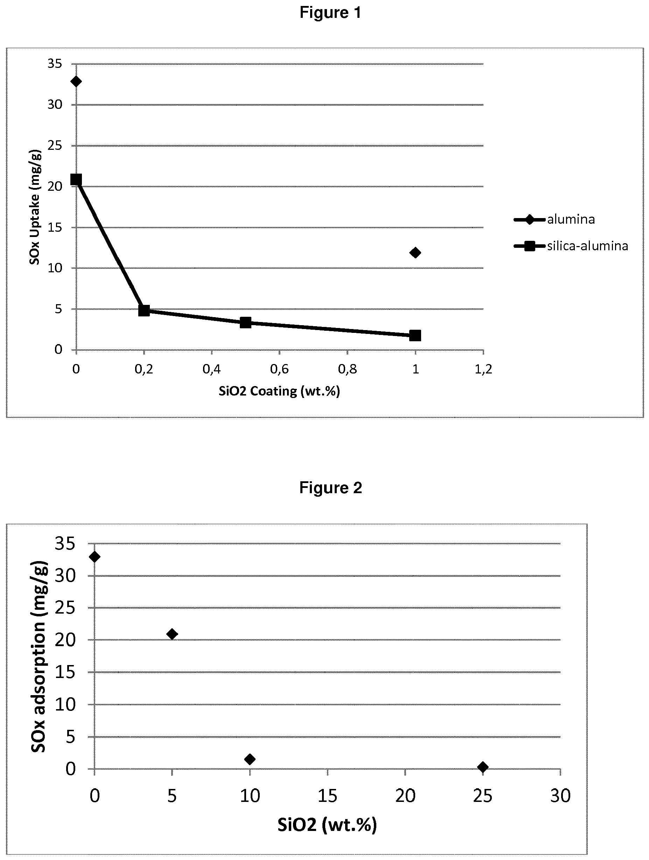

Figure 1 represents a plot of the amount of SOx uptake relative to the wt.% of SiO₂ coating as per the invention; and
Figure 2 represents a plot of the amount of SOx adsorption relative to the wt.% of SiO₂ incorporated into the support material.

### EXAMPLES

### SOx tolerance test

The SOx tolerance was determined by measuring the SOx uptake capacity of the composition. Ca. 80 mg of the material were placed in a tubular quartz microreactor and were heated at a constant rate (10°C/min) under N₂ (total flow 0.5 l/min) until 300 °C. Adsorption experiments were conducted under isothermal condition at 300°C in O₂/SO₂/N₂ gas mixture (10% 02 v/v + 200 ppm SO₂, balance N2; total flow 0.5 l/min), up to saturation of the sample. Then the temperature was cooled down to 100 °C and the gas mixture was changed to N₂ (total Flow 0.5 l/min) until SO₂ Concentration signal went back to zero. The outlet gas composition (i.e. SO₂) was measured by using FT-IR gas analyzers (MultiGas 2030, MKS).

### Experiments - SiO₂ Coating

### Comparative Example 1

A state-of-the-art Mn oxide impregnated support material was prepared by impregnating a commercially available alumina having a BET surface area of 150 m²/g and a pore volume of 0.8 ml/g with manganese acetate solution by incipient wetness impregnation yielding a total loading of 5% MnO₂ relative to the manganese oxide impregnated support material followed by a calcination at 550°C for 3 h.

### Example 1

The Mn oxide impregnated support material as prepared in Comparative Example 1 was impregnated with an aqueous solution of silicic acid under incipient wetness impregnation conditions. Subsequently the material was calcined at 550°C for 3h. The final amount of coated SiO₂ was 1 wt.% based on the total Mn oxide impregnated support material.

### Comparative Example 2

A state-of-the-art Mn oxide impregnated support material was prepared by impregnating a commercially available silica-alumina containing 5 wt.% SiO₂ and having a BET surface area of 180 m²/g and a pore volume of 0.7 ml/g with manganese acetate solution by incipient wetness yielding a total loading of 5% MnO₂ relative to the manganese oxide impregnated support material followed by a calcination at 550°C for 3 h.

### Example 2

The Mn oxide impregnated support material as prepared in Comparative Example 2 was impregnated with an aqueous solution of silicic acid under incipient wetness impregnation conditions. Subsequently the material was calcined at 550°C for 3h. The final amount of coated SiO₂ was 0.2 wt.% based on the total Mn oxide impregnated support material.

### Example 3

The material was prepared as in Example 2 but the amount of SiO₂ coating was 0.5 wt.% based on the total composition.

### Example 4

The material was prepared as in Example 2 but the amount of SiO₂ coating was 1 wt.% based on the total composition.

The results of the Examples and Comparative Examples are included in Table 1. From Table 1 it is clear that the uptake of SOx is greatly reduced by the present invention when compared to the Comparative Examples.

**Table 1**

| Effect of SiO₂ coating on SOx uptake capacity | | | | |
|---|---|---|---|---|
| | Alumina based support material composition | Amount Mn (MnO₂ wt.%) | Amount SiO₂ coated (wt.%) | SOx uptake (mg/g) |
| Comparative Example 1 | Al₂O₃ (100%) | 5 | 0 | 32,9 |
| Example 1 | Al₂O₃ (100%) | 5 | 1 | 11,9 |
| Comparative Example 2 | Al₂O₃ 95% / SiO₂ 5% | 5 | 0 | 20,9 |
| Example 2 | Al₂O₃ 95% / SiO₂ 5% | 5 | 0,2 | 4,8 |
| Example 3 | Al₂O₃ 95% / SiO₂ 5% | 5 | 0,5 | 3,3 |
| Example 4 | Al₂O₃ 95% / SiO₂ 5% | 5 | 1 | 1,7 |

### Experiments SiO₂ incorporated into the support:

### Example 5

A silica-alumina containing 10 wt.% SiO₂ and having a BET surface area of 250 m²/g was prepared by adding silicic acid to an aluminium compound that was formed by the hydrolysis of an aluminium alkoxide, followed by spray drying and a subsequent calcination at 900°C for 3h. The silica-alumina was impregnated with manganese acetate solution by incipient wetness impregnation yielding a total loading of 5% MnO₂ relative to the manganese oxide impregnated support material followed by calcination at 550°C for 3 h.

### Example 6

The material was prepared as in Example 5 but the amount of SiO₂ added to the aluminium compound was adjusted to obtain a silica-alumina containing 25 wt.% SiO₂ with a BET surface area of 321 m²/g and a pore volume of 1.07 ml/g after calcination at 1000°C for 3 h.

### Example 7

An aqueous solution of Zr Acetate was added to a mixture of silicic acid and an aluminium compound that was formed by the hydrolysis of an aluminium alkoxide and the mixture was spray dried and calcined at 900°C for 3h to obtain a ZrO₂ containing silica-alumina based support material having a BET surface area of 156 m²/g and a pore volume of 0.8 ml/g. The percentage of ZrO₂ added and SiO₂ added is each 5% (relative to the alumina based support material). The alumina based support material was further impregnated with a manganese acetate solution by incipient wetness impregnation yielding a total loading of 5% MnO₂ relative to the manganese oxide impregnated support material followed by calcination at 550°C for 3 h.

The results of the experiments are included in Tables 2 and 3 hereunder:

**Table 2**

| Effect of SiO₂ content in support material on SOx uptake capacity | | | |
|---|---|---|---|
| | Alumina based support material | Amount Mn (MnO₂ wt.%) | SOx uptake (mg/g) |
| Comparative Example 1 | Al₂O₃ (100%) | 5 | 32,9 |
| Comparative Example 2 | Al₂O₃ 95% / SiO₂ 5% | 5 | 20,9 |
| Example 5 | Al₂O₃ 90% / SiO₂ 10% | 5 | 1,5 |
| Example 6 | Al₂O₃ 75% / SiO₂ 25% | 5 | 0,3 |

Again, from the Tables it is clear that the uptake of SOx is greatly reduced by the present invention when compared to the Comparative Examples.

**Table 3**

| Effect of Zr02 in support material on SOx uptake capacity | | | |
|---|---|---|---|
| | Alumina based support material | Amount Mn (MnO₂ wt.%) | SOx uptake (mg/g) |
| Comp. Example 2 | Al₂O₃ 95% / SiO₂ 5% | 5 | 20,9 |
| Example 7 | Al₂O₃ 90% / SiO₂ 5% / ZrO₂ 5% | 5 | 6,3 |

## Claims

1. A composition comprising:
a support material comprising an alumina based material and manganese oxide, the content of the manganese oxide in the support material being between 0.1 and 20 wt.% of the total support material calculated as MnO₂, the support material further comprising SiO₂ and optionally oxides of zirconium, titanium, rare-earth elements or combinations thereof, the SiO₂ being either incorporated into the support material or the SiO₂ being a coating of the support material or both;
i) wherein where the SiO₂ is incorporated into the support material, the SiO₂ content is greater than 5 wt% relative to the alumina based support material, if no oxides of zirconium, titanium, rare-earth elements or combinations thereof are incorporated into the support material or;
ii) wherein where the SiO₂ is incorporated into the support material the SiO₂ content is at least 5 wt% relative to the alumina based support material, if oxides of zirconium, titanium, rare-earth elements or combinations thereof are incorporated into the support material or;
iii) wherein the SiO₂ coats the support material, the SiO₂ coating makes up at least 0.2wt.% of the support material relative to the alumina based support material.

2. The composition of claim 1, wherein the alumina based material is alumina, silica-alumina or a mixture thereof, preferably alumina.

3. The composition of claim 1, wherein the support material comprises oxides of zirconium, preferably ZrO₂.

4. The composition of claim 1, wherein the manganese oxide content is preferably between 1 and 10 wt.%, calculated as MnO₂, of the support material.

5. The composition of claim 1, wherein the SiO₂ coating is 0,2 to 5 wt.% relative to the alumina based support material.

6. The composition of claim 1, wherein where the SiO₂ is incorporated into the support material without oxides of zirconia, titanium, rare-earth elements or combinations thereof, the support material comprises a SiO₂ content of at least 10 wt% relative to the alumina based support material.

7. The composition of claims 1 and 3, wherein where the support material includes ZrO₂, then at least 5% wt. of SiO₂ and at least 5% wt. ZrO₂ is incorporated into the support, each relative to the alumina based support material.

8. A method to prepare a composition the method comprising, the following steps in any order of the steps ii) to iv):
i) providing an alumina based support material;
ii) optionally adding oxides of zirconium, titanium, rare-earth elements or combinations thereof to the alumina based support material or to the manganese oxide impregnated support material or to both;
iii) impregnating the alumina based support material with a manganese oxide salt solution to form a manganese oxide impregnated support material; and
iv) adding SiO₂ into the alumina based support material or the manganese oxide impregnated support material by:
a. coating the manganese oxide impregnated support material with a SiO₂ solution to form a SiO₂ coating around the manganese oxide impregnated support material, the SiO₂ coating forming at least 0.2 wt.% relative to the alumina based support material; or
b. incorporating SiO₂ into the support material, wherein where the SiO₂ is incorporated into the alumina based support material the SiO₂ content is greater than 5 wt% relative to the alumina based support material, if no oxides of zirconium, titanium, rare-earth elements or combinations thereof are incorporated into the support material; or
c. incorporating SiO₂ into the support material, wherein where the SiO₂ is incorporated into the alumina based support material the SiO₂ content is at least 5 wt% relative to the alumina based support material, if oxides of zirconium, titanium, rare-earth elements or combinations thereof are incorporated into the support material.

9. The method of claim 8, wherein the alumina based support material is either alumina, silica-alumina or a mixture thereof, and preferably is alumina.

10. The method of claim 8, wherein oxides of zirconium, preferably ZrO₂ are incorporated into the alumina based support material.

11. The method of claim 8, wherein the alumina based support material is impregnated with a manganese oxide salt solution by incipient wetness impregnation.

12. The method of claim 8, wherein where the manganese oxide impregnated support is coated with SiO₂, the SiO₂ coating is 0,2 to 5 wt.%, relative to the alumina based support material.

13. The method of claim 8, wherein the manganese oxide impregnated support is coated with silicic acid.

14. The method of claim 8 wherein, where the SiO₂ is incorporated into the support material without oxides of zirconia, the support material comprises a SiO₂ content of preferably at least 10 wt% relative to the alumina based support material.

15. The method of claim 8 and claim 10 wherein, where the support material includes ZrO₂, then at least 5 wt%. of SiO₂ and at least 5 wt% ZrO₂ is incorporated into the support, relative to the support material.

16. Use of the composition of any of claims 1 to 7 as a carrier for a catalyst in particular an exhaust catalyst and most particular a diesel exhaust catalyst.
